Europäisches Patentamt

European Patent Office

Office européen des brevets

(19)

(11) **EP 0 395 188 B2**

(12) # NEW EUROPEAN PATENT SPECIFICATION

(45) Date of publication and mention
of the opposition decision:
**30.09.1998 Bulletin 1998/40**

(51) Int Cl.⁶: **G01K 1/02**, G01K 7/24

(45) Mention of the grant of the patent:
**06.04.1994 Bulletin 1994/14**

(21) Application number: **90201080.0**

(22) Date of filing: **27.04.1990**

(54) **A device for measuring physical parameters**

Vorrichtung zum Messen physikalischer Parameter

Dispositif pour mesurer des paramètres physiques

(84) Designated Contracting States:
**DE FR GB NL**

(30) Priority: **28.04.1989 NL 8901079**

(43) Date of publication of application:
**31.10.1990 Bulletin 1990/44**

(73) Proprietor: **N.V. Nederlandsche Apparatenfabriek
NEDAP
NL-7141 DE Groenlo (NL)**

(72) Inventor: **Stekelenburg, Jan Cornelis
NL 7051 GH Varsseveld (NL)**

(74) Representative:
**Smulders, Theodorus A.H.J., Ir. et al
Vereenigde Octrooibureaux
Nieuwe Parklaan 97
2587 BN 's-Gravenhage (NL)**

(56) References cited:
DE-A- 2 748 584          DE-A- 2 753 871
DE-C- 3 219 558          US-A- 3 978 471
US-A- 4 075 632

- PT/ELEKTROTECHNIEK ELEKTRONICA, vol. 39,
  no. 7/8, August 1984, page 59, Rijswijk, NL;
  F.W.I.: "Temperatuurmeting op afstand"
- Lüke, H.L., "Signalübertragung",
  Springer-Verlag, 1975
- Philips Lehrbriefe, Band 1, pages 145-147, 1963
- Sensoren III, Elektronik Sonderheft, Nr. 258,
  1987, pages 45-49

**Description**

The invention relates to a device for measuring physical parameters, in particular suitable for measuring temperature, comprising a probe including a sensor element capable of converting the value to be measured into an electrical signal.

Temperatures are measured in known manner, for example, by means of mercury and alcohol thermometers. Furthermore, electronic thermometers are also known. The disadvantages of the known thermometers are that the device with which the temperature is measured is directly connected to the appurtenant read-out means, such as a reading scale or dial, a display, and the like. When temperatures of human beings, animals or goods are to be measured, there should always be a fixed contact between the measuring device within the body or good, and the read-out device outside the body or good. Furthermore, when the temperature is determined electronically, a power source should be present directly at or within the temperature sensor, which provides the circuit with power.

It is accordingly not always possible to use such measuring devices.

From the journal PT Elektrotechniek Elektronica 39 (1984) Nr. 7/8 a passive probe is known for wirelessly measuring temperature. This known probe comprises a resonant circuit which can be brought into resonance by a high-frequency interrogation field. Coupled to the resonant circuit is an RC oscillator which comprises a temperature-dependent resistor. The temperature-dependent resistor determines the oscillating frequency of the RC oscillator.

If the probe is present within an interrogation field generated by a transmitter/receiver of an interrogation device, the probe is activated. The resonant circuit gets into the resonant state and the RC oscillator begins to oscillate at a frequency depending on the ambient temperature of the temperature-sensitive resistor. The signal from the RC oscillator modulates the high-frequency signal induced in the resonant circuit in phase, which is detected in the transmitter/receiver.

One disadvantage of this known technique is that the measured values obtained become available in the form of an analogue signal, which is rather sensitive to interference and also cannot be processed by a digital processor without more ado.

There is accordingly a need for a measuring device comprising a wirelessly operating probe providing binary measuring signals

Furthermore, there is a need for a probe which, in addition to measuring signals can provide binary identification signals to identify the wearer (human being, animal, article, apparatus or any part thereof) of the probe. This latter is of particular importance if a plurality of probes are used, with each probe being fixedly arranged within or at a different wearer or different part of the same wearer.

It is an object of the invention to satisfy the need outlined. To this effect, the object of the invention is met by the device according to claim 1.

It is observed that Netherlands patent 176404 discloses a passive electronic responder comprising a receiver circuit and a digital circuit, which in operation receives supply energy from a rectifying circuit connected to the receiver circuit. The digital circuit further provides, in operation, a binary identification signal which, through a switch element, can modulate the AC voltage induced in the receiver circuit, by periodically attenuating the receiver circuit.

US-A-4 075 632 relates to a telemetering system comprising a interrogator/generator which generates at least one single rf signal, a transponder for receiving that signal and for amplitude modulating it in accordance with information selected for transmitting it back to the interrogator. Such information can comprise a measuring signal and a digitally coded signal for identifying the transponder whereby said signals are simultaneously superimposed on the rf carrier of the rf signal.

The known responder does not, however, comprise a sensor element and a digital measuring circuit and accordingly can not be used as a measuring probe.

The invention will be described in more detail hereinafter with reference to the accompanying drawings.

Fig. 1 diagrammatically shows a measuring device according to the invention;
Fig. 2 shows diagrammatically the electrical diagram of one embodiment of a probe for a measuring device according to the invention;
Fig. 3 shows, in greater detail, an example of an electrical diagram of a measuring section of a measuring sensor for a measuring device according to the invention;
Fig. 4 illustrates in a few diagrams the variation in the time of a plurality of signals occurring in the measuring sensor of Fig. 3; and
Fig. 5 and Fig. 6 diagrammatically show a detail of the measuring section of a temperature measuring sensor according to the invention.

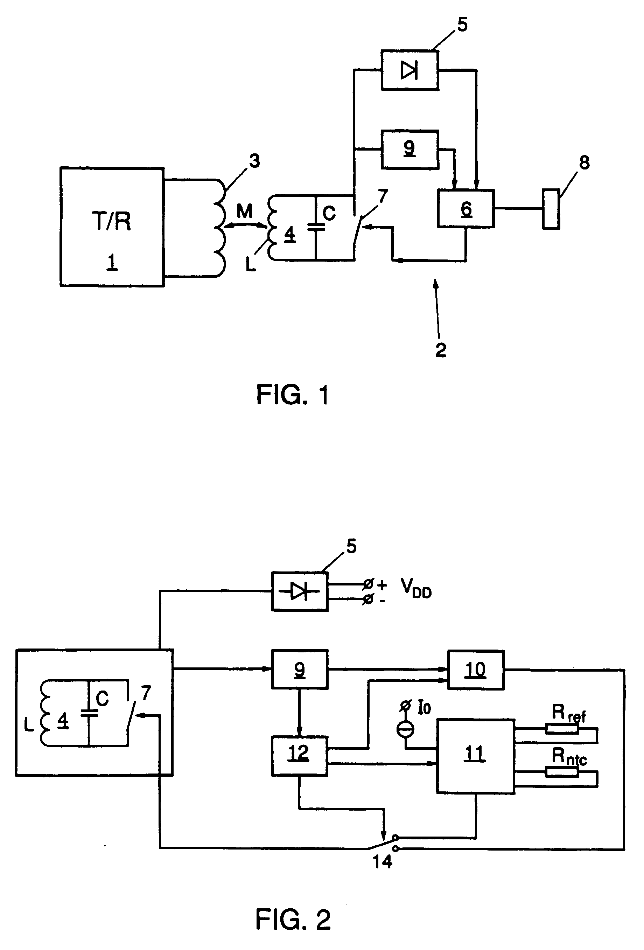

Fig. 1 shows diagrammatically an example of a measuring device according to the invention with a transmitter/receiver 1 and a measuring probe 2. In operation, the transmitter/receiver generates, through a transmitting coil 3, an electromagnetic interrogation field. If a probe 2 is present in the interrogation field, which probe has a receiving circuit 4 with a coil L, a mutual inductive coupling is established, as indicated by a double arrow M. In the example shown, the receiver circuit 4 comprises a resonant circuit LC tuned to the frequency of the interrogation field. The receiver circuit can draw energy from the interrogation field in the manner described, for example, in Netherlands patent 176404, which, through a rectifying circuit 5 can be supplied as supply power to an active digital circuit 6 of the passive probe.

Furthermore, a clock signal generator 9 is shown, which in its simplest form may be a one-sided rectifier, but also, for example, a flipflop. In operation, the digital circuit provides a binary output signal which controls a switch element 7. In this way the switch element 7 attenuates and/or detunes the resonant circuit LC in the rhythm of the binary output signal, which can be detected at the transmitter/receiver end.

The operating principle described above is described in more detail in Netherlands patent 176404.

According to the invention, a sensor element 8 is connected to digital circuit 6, the electrical value of which depends upon a physical parameter to be measured. The sensor element may, for example, be a temperature-dependent resistor, such as an NTC resistor (= negative temperature coefficient resistor) or a pressure-dependent resistor, or a light-dependent resistor (LDR) and the like. The choice of the sensor element depends upon the nature of the physical parameter to be measured.

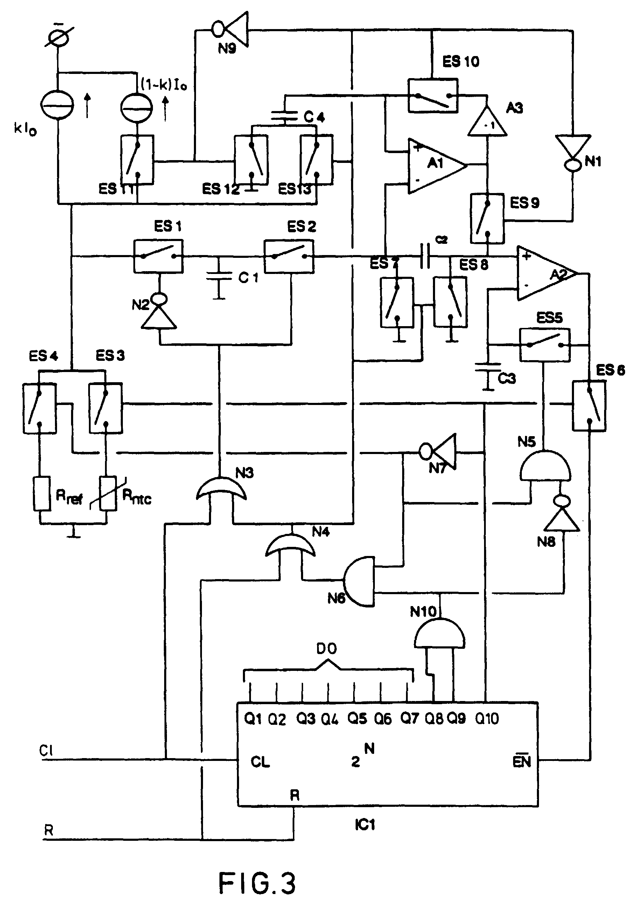

In the embodiment of Figs. 2 and 3, the sensor element comprises an NTC resistor, so that the probe is suitable for measuring the temperature.

The temperature or other physical parameter measured is converted by the digital circuit into a binary signal, which can be supplied as a control signal to switch element 7. The digital circuit further preferably comprises a pre-determined binary identification code which, before or after the binary measuring signal, is supplied to the switch element 7 as a control signal. If identification is not necessary or not desirable, a code consisting exclusively of noughts or ones can be programmed, so that the signal ultimately generated by the probe and received by the transmitter/receiver only represents the measured value.

With regard to the use of an NTC resistor, the following is further observed.

The resistance of an NTC resistor depends according to an exponential function upon the temperature. When a temperature-independent resistor ($R_{off}$ = offset resistor) is series-connected to an NTC resistor, a substantially linear relationship between temperature and resistance can be obtained through a limited temperature range of about 15°C. The error resulting in this temperature range is negligible if the error permitted is $\pm 0.1°C$, which in practice is mostly the case. As a result of the linear relationship between temperature and the combination of the two resistors, it is possible for the absolute temperature to be accurately determined in the limited temperature range. When this (absolute) temperature is measured, the whole of $R_{off}$ and $R_{ntc}$ is compared to a reference resistance $R_{ref}$. When the NTC resistance and the reference resistance are properly selected, the measuring range of the thermometer is adjustable throughout a large temperature range. In the desired measuring range, preferably in the middle thereof, the NTC resistance value equals the reference resistance at a temperature x. Furthermore, the conversion factor B from temperature to resistance should be accurately fixed. B is a material constant selected during the manufacture of the NTC resistor. If, during the manufacturing process, the absolute value of both the NTC resistance and the reference resistance only has a slight tolerance, the resistors need not be adjusted.

The electronic circuit of the measuring probe has the task of comparing the NTC resistance and the reference resistance with each other. The circuit can function with the available power of about 10 μW, which is withdrawn from the interrogation field.

The offset resistance $R_{off}$ is in practice only a calculating magnitude and $R_{off}$ is not present in the actual thermometer. During a reset period, by means of the reference resistor an offset voltage is generated and stored in a memory. This voltage has the same value as the voltage across an imaginary offset resistor during the measuring period. Subsequently this voltage is electronically added to the voltage across the NTC resistor. The result ultimately is that the remainder of the circuit responds equally to a real series circuit of NTC and offset resistors.

Fig. 2 shows diagrammatically in the form of a block diagram the construction of a temperature measuring probe according to the invention. If the probe is present in an interrogation field, the receiver circuit 4 again provides, through a rectifying circuit 5, supply voltage $V_{DD}$ for the active components of the probe. Furthermore, there is again shown a clock signal generator 9, which provides clock signals to code circuit 10, which contains the identification code of the probe.

A measuring circuit 11, which will be described in more detail hereinafter, is connected to an NTC resistor $R_{ntc}$ for measuring the temperature and with a constant current source $I_o$, which through the measuring circuit 11 is alternately connected to the NTC resistor and to a reference resistor $R_{ref}$.

The measuring circuit 11 receives control signals, such as synchronization signals, reset signals, clock signals, and the like, from a control signal generator 12. The control signal generator also controls a switch element 14, whose position determines whether the output of code circuit 10 or the output of measuring circuit 11 provides the control signal for the switch element 7.

It is noted that Fig. 2 is highly schematical. Parts of different blocks, for example, may actually be combined. On the other hand, in practice, the circuits shown as one block in Fig. 2 may consist of a plurality of scattered parts.

After completion of the measurement, the temperature measured is shown on the data outputs $D_o$ of a binary counter $IC_1$, indicated in Fig. 3, in binary form. The 7 bits $Q_1$ to $Q_7$ indicated may form $2^7 = 128$ different figures, so that, with an accuracy of 0.1°C, the measuring range equals 128/10 = 12.8°C. The binary temperature code is subsequently combined in a binary or other suitable code form with a binary identification code in the responder memory. The complete code can then be transmitted through field modulation to a processing unit (transmitter/receiver). The circuit begins to operate after the reset input R has assumed the logic value "0". Under the control of a clock signal CL, the binary counter ($IC_1$) begins to count from the reset value 0. Electronic switches ES4 and ES5 are now closed via AND gate N5, inverters N7, N8 and AND gate N10. Counter outputs $Q_8$ and $Q_9$ are in fact "0". Electronic switches ES11 and ES12 are now closed because the two inputs of OR gate N4 are "0", so that the output of inverter N9, which controls switches ES11, ES12 is "1". There is now a current $I_o$, provided by the contstant current sources $kI_o$ and (1-k) $I_o$ through resistor $R_{ref}$. This causes a voltage across this resistor, which is transmitted to capacitor C1. Switches ES1 and ES2 are opened and closed in the rhythm of clock CL one after the other through OR gate N3 and inverter N2. As a result capacitor C1 is each time charged through ES1 and discharged through ES2. The charge which thus flows away is Stored in a capacitor C2, across which the voltage increases. Through differential amplifier A2, the voltage across capacitor C2 is copied across a capacitor C3 until counter $IC_1$ has reached the position 384. In this situation, $Q_8$ and $Q_9$ are "1" and ES5 is opened because the output of AND gate N5 becomes "0". The voltage across C3 can then no longer change. Through OR gate N4, AND gate N6, inverter N7 and OR gate N10, the circuit is reset. Capacitors C1 and C2 are thereby discharged through switches ES7, ES8 and ES2. Through switches ES10 and ES13, a circuit is put into operation, with which, by means of a fraction $kI_o$ of the total current source $I_o$, a capacitor C4 is charged to a voltage equalling the offset of an amplifier A1 plus $R_{off}$ x $I_o$. The output of OR gate N4 is at that moment "1", so that switches ES10 and ES13 are closed. At the same time, switches ES11 and ES12 are opened. Accordingly, only a current $kI_o$ flows through $R_{ref}$, and capacitor C4 can be charged to a voltage equalling $kI_oR_{ref}$ plus the offset voltage of amplifier A1. For a proper operation of the circuit, amplifier A1 must not have any offset. The offset compensation of A1 and the offset generation for proper linearity are combined in one circuit, as a result of which the maximum error in the ultimate value measured will be minimal.

To clarify the offset compensation and generation, the following is further observed.

During a reset period, capacitor C1 is discharged through switches ES2 and ES7, while capacitor C2 is discharged through switches ES7 and ES8. Capacitor C3 is simultaneously charged through switch ES5 to the offset voltage $V_{off}$A2 of amplifier A2. Finally, capacitor C4 is also charged through switch ES7, amplifier A1, amplifier or inverter A3, switch ES10, and switch ES13 through the section $kI_o$ of the constant current source. The section (1-k)$I_o$ of the current source has been put out of operation by switch ES11 at that moment.

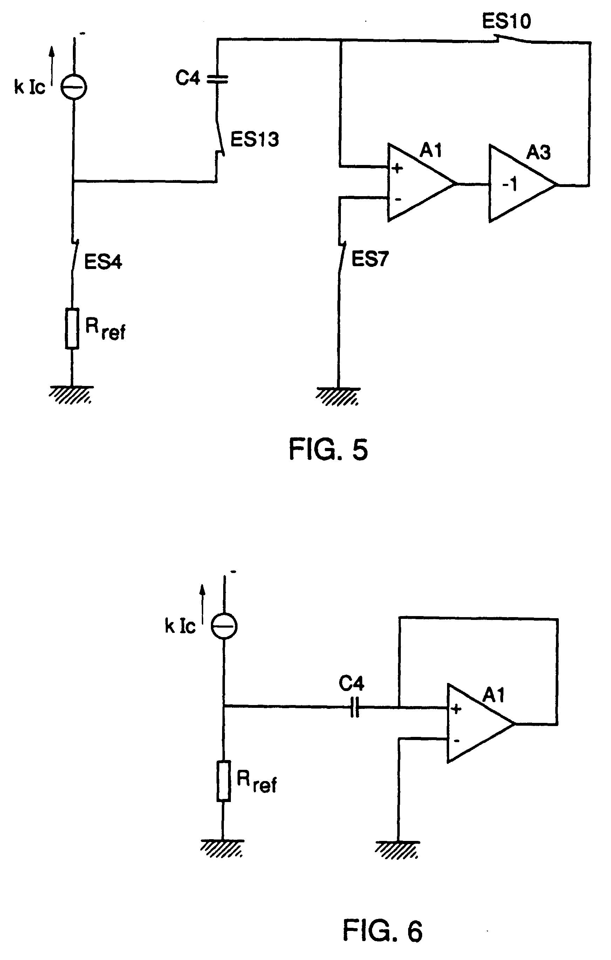

The part of the measuring circuit just described is shown in Fig. 5.

The circuit of Fig. 5 corresponds to that of Fig. 6.

Fig. 6 shows that capacitor C4, at the end connected to amplifier A1, carries the offset voltage of amplifier A1 $V_{offA2}$, and at the other end a voltage $-kI_oR_{ref}$, so that the voltage across C4 is accordingly $V_{offA1} + kI_oR_{ref}$.

After the reset period, when switch ES1 is closed, capacitor C1 is charged to a voltage $V = I_o.R_{ref}$. Subsequently, ES2 is closed and ES1 opened, so that capacitor C1 is discharged to a voltage $V_{c4} - V_{offA1}$. The voltage across capacitor C2 is increased in each switching cycle of switches ES1 and ES2 by $\Delta V = V_{c4} - V_{offA1} + I_oR_{ref}$. As during the reset period $V_{c4}$ was brought to the value $V_{c4} = V_{offA1} + kI_oR_{ef}$ the offset voltage of amplifier A1 drops in $\Delta V$, so that we have $\Delta V = (k + 1) I_o.R_{ref}$.

For p switching cycles, we have

$$V_{c2} = p.\frac{C1}{C2} (k + 1) I_o R_{ref}.$$

For practical reasons, the value 384 has been selected for p, which corresponds to a counter position in which $Q_8$ and $Q_9$ are "1".

When switch ES5 is closed, the voltage across capacitor C3 becomes equal to $V_{c3} = V_{c2} + V_{offA2}$.

In the next reset period, $V_{c3}$ remains constant, and capacitor C4 is again charged to $V_{c4} = V_{offA1} + k.I_oR_{ref}$.

During the measuring period, $R_{ref}$ is replaced by $R_{ntc}$. In that period, a voltage $V'_{c2}$ is built up, for which we have $V'_{c2} = V_{c2} + V_{offA2}$. As soon as $V'_{c2}$ has become equal to $V_{c3}$, the measurement is terminated.

When $V'_{c2}$ is compared to $V_{c3}$, the offset voltage $V_{offA2}$ is again cancelled.

Ultimately, a comparison is made of

p. $(R_{ref} + k R_{ref})$ with

n. $(R_{ntc} + k R_{ref})$ as a result of which, in spite of an exponential relationship between the resistance value of an NTC resistor and the temperature, there is yet obtained a substantially linear relationship between n (the counter position at the end of the measurement) and T through a sufficiently large temperature range around a reference temperature $T_{ref}$, with $R_{ntc} = R_{ref}$.

In position 512 of counter $IC_1$, the reset period terminates, and the actual measurement starts. Switches ES3 and ES6 are now closed, while switch ES4 is opened. Switch ES11 is again closed. As a consequence, the total current $I_o$ travels through $R_{ntc}$ instead of $R_{ref}$, as a result of which the voltage across C1 may have a different value than during the counter position 0-384. This has consequences for the velocity at which capacitor C2 will be charged. For temperatures above $T_{ref}$, $R_{ntc}$ is lower than $R_{ref}$. As a result $V_{c1}$ is lower, and more than 384 clock pulses are needed before $V_{c2} = V_{c3}$.

If now $V_{c2} = V_{c3}$, the amplifier A2, which is connected as a comparator, reverses, and via switch ES6 stops the counter. The counter position now reached depends on the temperature. After deducting the starting value of 512, at temperatures lower than $T_{ref}$ the counter position will be lower than 384, while for temperatures upwards of $T_{ref}$ the counter position will exactly be higher than 384.

In the following table, the course of the measuring process and the relevant counter and switch positions are represented in full and in sequence. The process begins with a reset of counter $IC_1$. The position of the electronic switches is indicated by "1" for closed and "0" for open.

| Condition | Position $IC_1$ | Electronic Switch Nr. | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| RESET | 0 | 0 | 1 | 0 | 1 | 1 | 0 | 1 | 1 | 0 | 1 | 0 | 0 | 1 |
| 1 | 0 | 1 | 0 | 0 | 1 | 1 | 0 | 0 | 0 | 1 | 0 | 1 | 1 | 0 |
| 1a | 0 | 0 | 1 | 0 | 1 | 1 | 0 | 0 | 0 | 1 | 0 | 1 | 1 | 0 |
| 2 | 1-383 | 1 | 0 | 0 | 1 | 1 | 0 | 0 | 0 | 1 | 0 | 1 | 1 | 0 |
| 2a | 1-383 | 0 | 1 | 0 | 1 | 1 | 0 | 0 | 0 | 1 | 0 | 1 | 1 | 0 |
| 3 | 384-511 | 0 | 1 | 0 | 1 | 0 | 0 | 1 | 1 | 0 | 1 | 0 | 0 | 1 |
| 3a | 384-511 | 0 | 1 | 0 | 1 | 0 | 0 | 1 | 1 | 0 | 1 | 0 | 0 | 1 |
| 4 | 512-... | 1 | 0 | 1 | 0 | 0 | 1 | 0 | 0 | 1 | 0 | 1 | 1 | 0 |
| 4a | 512-... | 0 | 1 | 1 | 0 | 0 | 1 | 0 | 0 | 1 | 0 | 1 | 1 | 0 |

- Condition RESET: Start of each measuring cycle. Capacitors C1, C2 and C3 are discharged. Capacitor C4 is charged to the voltage described before, which is the sum of the offset voltage of amplifier A1 and the voltage across the imaginary offset resistor.

- Condition 1: This is the condition immediately after the reset signal R drops off. The position of switches ES1 and ES2 is dependent upon the phase of the clock signal, so that, just as at counter positions 1 to 383, there are alternate switches from condition 1 to 1a and from 1a to 1. The same applies to conditions 2 and 2a.

- Condition 2: This is the condition at which voltages across C2 and C3 are generated by means of the voltage generated across $R_{ref}$ and $R_{off}$. When the counter position has passed value 383, C3 will retain the voltage across $R_{ref}$ + the imaginary $R_{off}$ 384 times.

- Condition 3: This is the condition in which a condition resembling the RESET situation is reached with the only difference that the C3 is not discharged. All switches, except ES5, are reset. The counter, however, is not reset. The voltage across C3 will be used during the second part or the measuring cycle (512-...) as a comparative value for the voltage across C2. The voltage across C2 in that period will be obtained as the result of repeated addition of the voltage across $R_{ntc} + R_{off}$ instead of that across $R_{ref} + R_{off}$.

- Condition 4: This is a condition which largely corresponds to condition 2. Instead of $R_{ref}$, however, resistor $R_{ntc}$ is connected to the constant current source of value $I_o$. Switch ES5 is still open and switch ES6 is closed, so that in the condition: $V_{c2} = V_{c3}$ comparator A2 will reverse and further counting will become impossible. In that final situation, depending on the temperature, the counter position will range between 832 and 959.

The counter position minus position (512) at the beginning of condition 3 now forms a binary representation of the temperature of the NTC resistor, and, with or without further processing, may be transmitted to the transmitter/receiver similarly to the identification code.

It is noted that the voltage at the node: ES1, ES3 and ES4, which is the result of $I_o \times R_{ntc}$ or $I_o \times R_{ref}$ is negative in this example relative to mass!

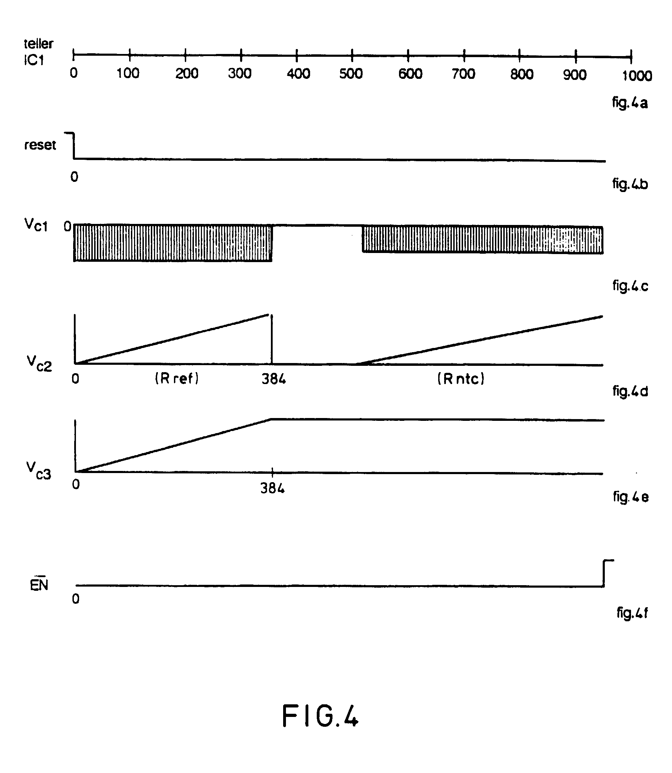

In Fig. 4, some voltage configurations are shown as a function of the time of a number of important signals in the temperature meter.

Fig. 4a shows the position of counter $IC_1$ which increases by increments of 250 µs from the starting value 0 to a certain value, which value depends on the temperature. The numbers presented in decimals in Fig. 2a are actually binary figures indicated by outputs $Q_1$ to $Q_{10}$ of $IC_1$.

Fig. 4b shows the reset signal provided by external logic. The value of the reset signal determines the moment when measurement starts. In this figure, the measurement begins at the transition of reset value 1 to 0.

Fig. 4c shows the voltage, and the variation therein, across capacitor C1. At $R_{ref}$, this voltage is temperature-independent. At $R_{ntc}$, the voltage is a function of the temperature.

Fig. 4d shows the voltage variation across capacitor C2 as a function of the position of counter $IC_1$. The slope of the voltage curve in the period associated with counter positions between 0 and 384 is determined by the reference resistance and is hence independent of the temperature.

The voltage across C3, shown diagrammatically in Fig. 4e, follows $V_{c2}$ from counter position 0 to 384, whereafter the voltage is fixed. The NTC resistor provides curve $V_{c2}$ between counter position 512 and counter position 832.... 959. The moment when the measurement stops and the counter position between 832 and 959 then reached, depend upon the NTC resistance value and hence upon the temperature. The only criterion applying to termination is that voltages $V_{c2}$ and $V_{c3}$ should be equal. When the voltages $V_{c2}$ and $V_{c3}$ become equal, the amplifier A2 operating as a comparator provides a positive output signal, as a result of which AND in Fig. 2f assumes a high level and the counter stops. The counter position reached between 832 and 959 is a measure for the temperature measured. When the counter does not stop in the range indicated, the value of the counter indicated is left out of account as a temperature.

As an example for an electronic transducer with a measuring circuit, an NTC resistor has been used for determining temperatures. The exponential character of this resistor is used in the measuring circuit. If a transducer is desired for, for example, measuring light intensity, a light-dependent resistor (LDR) may be used. Other non-linear resistors may be used as well. It is then necessary for the measuring circuit to be adapted, without, however, changing the essential features of the apparatus. This is the case, for example, with pressure-dependent resistors or electrolytic solutions which begin to behave as a resistor.

The circuits described can be realized by the low-voltage MOS IC technique.

## Claims

1. A device for measuring physical parameters, in particular suitable for measuring temperature, comprising a probe (2) including a sensor element (8) capable of converting the value to be measured into an electrical signal and a digital code circuit (6,10), in which an identification code is stored, said probe including a receiving circuit (4) in which an AC voltage can be induced by an electromagnetic field which, in operation, is generated by a transmitter/receiver(1) forming part of the measuring device, which AC voltage can be modulated depending on the measured value of the physical parameter and a digital identification code generated by the digital code circuit, characterised in that the receiving circuit (4) comprises a resonant circuit tuned to the frequency of the electromagnetic field, the probe (2) further comprises a substantially digital measuring circuit (6) connected to the sensor element (8) for generating a binary signal representing the value to be measured and the digital identification code generated by the digital code circuit is a binary identification code, wherein, in operation, the code circuit (6,10) and the measuring circuit (6,11) successively, through a switch element (7), modulate the AC voltage induced in the resonant circuit (4) with the binary signal and the binary identification code respectively.

2. A measuring device as claimed in claim 1, in which the sensor element (8) as a resistance value depending on the physical parameter to be measured, **characterized** in that the digital measuring circuit (6,11) comprises first controllable switches (ES4,ES3) which, in operation, successively connect a predetermined reference resistor (Rref) and the sensor element (8) with a constant current source (Io); that the digital measuring circuit (6,11) has second controllable switches (ES1,ES2) via which a first capacitor (C1), is repeatedly charged a predetermined number of times from the voltage provided over the reference resistor (Rref) in a first period when the reference resistor (Rref) is connected to the current source, which charges are stored in a second capacitor (C2) in order to charge said second capacitor (C2) in a predetermined number of increments corresponding to said predetermined number of times and in a second period, through the first capacitor (C1), in a number of corresponding increments, charge the second capacitor (C2) from the voltage provided by the sensor element (8) when the sensor element (8) is connected to the current source (Io), wherein the second capacitor (C2) is discharged between the first and the second period, and the number of increments needed in the second period for charging the second capacitor (C2) to the same voltage as in the first period is counted by means of a counter (IC1) and provides a measure for the parameter to be measured.

3. A measuring device as claimed in claim 2, **characterized** in that the digital measuring circuit (6,11) comprises a binary counter (IC1) to which, in operation, clock pulses (CL) are supplied continuously, and whose outputs (Q8-Q10) control the controllable switches, while also at least a number of outputs (PO) of the binary counter indicate the number of increments of the second period.

4. A measuring device as claimed in claim 2 or 3, **characterized** by a third capacitor (C3) which during the first period is connected to the second capacitor (C2) and takes over the charge from said second capacitor (C2), and which by means of a controllable switch (ES5) is uncoupled from said second capacitor (C2) at the end of the first period.

5. A measuring device as claimed in claim 4, **characterized** in that the second and third capacitors (C2,C3) are each connected during the second period to an input of a comparator (A2), the output of which is connected to the counter (IC1), said comparator providing an output signal as soon as the voltage at the second capacitor (C2) equals the voltage at the third capacitor (C3) which output signal causes the binary counter (IC1) to stop.

6. A measuring device as claimed in any of claims 2-5, adapted to measure temperatures by means of an NTC resistor (Rntc), **characterized** by a fourth capacitor (C4) which before the beginning of the first and between the first and the second period is connected to a part (klo) of the constant current source (lo) through controllable switches (ES12,ES13), the voltage generated across the fourth capacitor (C4) increasing the measuring accuracy and linearising the NTC resistor (Rntc).

**Patentansprüche**

1. Vorrichtung zum Messen physikalischer Parameter, insbesondere geeignet zum Messen von Temperaturen, mit einer Sonde (2), die mit einem Sensorelement (8), das den zu messenden Wert in ein elektrisches Signal umwandeln kann, und einer digitalen Codeschaltung (6,10) versehen ist, in der ein Erkennungscode gespeichert ist, wobei die Sonde eine Empfangsschaltung (4) umfaßt, in der durch ein elektromagnetisches Abfragefeld. das im Betrieb von einem Sender/Empfänger (1), der Teil einer Meßvorrichtung ist, erzeugt wird, eine Wechselspannung induziert werden kann, die in Abhängigkeit vom gemessenen Wert des physikalischen Parameters und von einem von der digitalen Codeschaltung erzeugten Identifizierungscode moduliert werden kann,
**dadurch gekennzeichnet**,
daß die Empfangsschaltung (4) eine auf die Frequenz des elektromagnetischen Feldes abgestimmte Resonanzschaltung aufweist, wobei die Sonde (2) ferner eine mit dem Sensorelement (8) verbundene, im wesentlichen digitale Meßschaltung (6) zum Erzeugen eines Binärsignals aufweist, das den zu messenden Wert repräsentiert, und der von der digitalen Codeschaltung erzeugte digitale Identifizierungscode ein binärer Identifizierungscode ist, wobei die Codeschaltung (6,10) und die Meßschaltung (6,11) im Betrieb aufeinanderfolgend über ein Schaltelement (7) die in der Resonanzschaltung (4) induzierte Wechselspannung mit dem Binärsignal bzw. dem binären Identifizierungscode modulieren.

2. Meßvorrichtung nach Anspruch 1, wobei das Sensorelement (8) einen vom zu messenden physikalischen Parameter abhängigen Widerstandswert hat, dadurch gekennzeichnet, daß die digitale Meßschaltung (6,11) erste steuerbare Schalter (ES4,ES3) umfaßt, die im Betrieb aufeinanderfolgend einen vorbestimmten Bezugswiderstand (Rref) und das Sensorelement (8) mit einer Konstantstromquelle (lo) verbinden; daß die digitale Meßschaltung (6,11) zweite steuerbare Schalter (ES1,ES2) hat, über die ein erster Kondensator (C1) wiederholt eine vorbestimmte Anzahl Male aus der Spannung aufgeladen wird, die über den Bezugswiderstand (Rref) in einer ersten Periode geliefert wird, wenn der Bezugswiderstand (Rref) mit der Stromquelle verbunden ist, welche Ladungen in einem zweiten Kondensator (C2) gespeichert werden, um diesen zweiten Kondensator (C2) in einer vorbestimmten Anzahl Schritte, die der genannten vorbestimmten Anzahl Male entspricht, aufzuladen und in einer zweiten Periode über den ersten Kondensator (C1) in einer Anzahl entsprechender Schritte den zweiten Kondensator (C2) aus der Spannung aufzuladen, die vom Sensorelement (8) geliefert wird, wenn das Sensorelement (8) mit der Stromquelle (lo) verbunden ist, wobei der zweite Kondensator (C2) zwischen der ersten und der zweiten Periode entladen wird und die Anzahl Schritte, die in der zweiten Periode erforderlich ist, um den zweiten Kondensator (C2) bis zur selben Spannung aufzuladen wie in der ersten Periode, mittels eines Zählers (ICl) gezählt wird und ein Maß für den zu messenden Parameter bildet.

3. Meßvorrichtung nach Anspruch 2, dadurch gekennzeichnet, daß die digitale Meßschaltung (6,11) einen binären Zähler (IC1) umfaßt, dem im Betrieb Taktimpulse (CL) kontinuierlich zugeführt werden und dessen Ausgänge (Q8-Q10) die steuerbaren Schalter steuern, während auch mindestens eine Anzahl Ausgänge (PO) des binären Zählers die Anzahl Schritte der zweiten Periode angibt.

4. Meßvorrichtung nach Anspruch 2 oder 3, gekennzeichnet durch einen dritten Kondensator (C3), der während der ersten Periode mit dem zweiten Kondensator (C2) verbunden ist und die Ladung von diesem zweiten Kondensator (C2) übernimmt und der mittels eines steuerbaren Schalters (ES5) am Ende der ersten Periode vom zweiten Kondensator (C2) entkoppelt wird.

5. Meßvorrichtung nach Anspruch 4, dadurch gekennzeichnet, daß der zweite und der dritte Kondensator (C2,C3) während der zweiten Periode je mit einem Eingang eines Komparators (A2) verbunden sind, dessen Ausgang mit dem Zähler (IC1) verbunden ist, wobei der Komparator ein Ausgangssignal liefert, sobald die Spannung am zweiten Kondensator (C2) gleich der Spannung am dritten Kondensator (C3) ist, welches Ausgangssignal den binären Zähler (IC1) anhält.

6. Meßvorrichtung nach einem der Ansprüche 2 bis 5, eingerichtet zum Messen von Temperaturen mittels eines NTC-Widerstandes (Rntc), gekennzeichnet durch einen vierten Kondensator (C4), der vor Beginn der ersten und zwischen der ersten und der zweiten Periode über steuerbare Schalter (ES12,ES13) mit einem Teil (klo) der Konstantstromquelle (Io) verbunden wird, wobei die am vierten Kondensator (C4) erzeugte Spannung die Meßgenauigkeit vergrößert und den NTC-Widerstand (Rntc) linearisiert.

**Revendications**

1. Dispositif de mesure de paramètres physiques convenant en particulier à la mesure de températures, comprenant une sonde (2) incluant un élément capteur (8) capable de convertir la valeur devant être mesurée en un signal électrique et un circuit de codage numérique (6, 10) dans lequel un code d'identification est stocké, ladite sonde incluant un circuit récepteur(4) dans lequel une tension alternative peut être induite par un champ électromagnétique qui, en fonctionnement, est généré par un émetteur-récepteur (1) faisant partie du dispositif de mesure, ladite tension alternative peut être modulée en fonction de la valeur mesurée du paramètre physique et un code d'identification numérique généré par le circuit de codage numérique, caractérisé en ce que le circuit récepteur (4) comprend un circuit résonnant réglé sur la fréquence du champ électromagnétique, la sonde (2) comprend également un circuit de mesure essentiellement numérique (6) connecté à un élément capteur (8) destiné à générer un signal binaire représentant la valeur devant être mesurée et le code d'identification numérique généré par le circuit de codage numérique est un code d'identification binaire, dans lequel, en fonctionnement, le circuit de codage (6, 10) et le circuit de mesure (6, 11) successivement, au moyen d'un élément de commutation (7) modulent la tension alternative induite dans le circuit résonnant (4) que le signal binaire et le code d'identification binaire codent respectivement.

2. Dispositif de mesure selon la revendication 1, dans lequel l'élément capteur (8) présente une résistance dont la valeur dépend du paramètre physique à mesurer, caractérisé par le fait que le circuit numérique de mesure (6, 11) comporte des premiers interrupteurs asservis (ES4, ES3) qui, en fonctionnement, relient successivement une résistance de référence prédéterminée (Rref) et l'élément capteur (8) à une source de courant constant (Io) ; par le fait que le circuit numérique de mesure (6, 11) comporte des deuxièmes interrupteurs asservis (ES1, ES2) par l'intermédiaire desquels un premier condensateur (C1) est chargé successivement un nombre prédéterminé de fois à partir de la tension fournie aux bornes de la résistance de référence (Rref), au cours d'une première phase pendant laquelle la résistance de référence (Rref) est reliée à la source de courant, ces charges étant emmagasinées dans un deuxième condensateur (C2) en vue de charger ledit deuxième condensateur (C2) selon un nombre prédéterminé d'incréments correspondant audit nombre prédéterminé de fois, et pour charger, au cours d'une deuxième phase, par l'intermédiaire du premier condensateur (C1) et selon un nombre d'incréments correspondants, le deuxième condensateur (C2) à partir de la tension fournie par l'élément capteur (8) lorsque l'élément capteur (8) est relié à la source de courant (Io), cependant que le deuxième condensateur (C2) est déchargé entre la première et la deuxième phase, et que le nombre d'incréments nécessaire au cours de la deuxième phase pour charger le deuxième condensateur (C2) à la même tension que dans la première phase est compté au moyen d'un compteur (IC1) et fournit la valeur du paramètre à mesurer.

3. Dispositif de mesure selon la revendication 2, caractérisé par le fait que le circuit numérique de mesure (6, 11) comprend un compteur binaire (IC1) auquel, en fonctionnement, des impulsions d'horloge (CL) sont fournies en continu, et dont les sorties (Q8 à Q10) commandent les interrupteurs asservis, tandis qu'au moins un certain nombre de signaux de sortie (D0) du compteur binaire indiquent aussi le nombre d'incréments de la deuxième phase.

4. Dispositif de mesure selon la revendication 2 ou 3, caractérisé par un troisième condensateur (C3) qui est relié au deuxième condensateur (C2) au cours de la première phase, qui reprend la charge dudit deuxième condensateur (C2) et qui est découplé dudit deuxième condensateur (C2) au moyen d'un interrupteur asservi (ES5) à la fin de la première phase.

5. Dispositif de mesure selon la revendication 4, caractérisé par le fait que, pendant la deuxième phase, le deuxième et le troisième condensateurs (C2, C3) sont chacun reliés à une entrée d'un comparateur (A2) dont la sortie est reliée au compteur (IC1), ledit comparateur fournissant un signal de sortie dès que la tension aux bornes du deuxième condensateur (C2) est égale à la tension aux bornes du troisième condensateur (C3), ce signal de sortie provoquant l'arrêt du compteur binaire (IC1).

6. Dispositif de mesure selon l'une quelconque des revendications 2 à 5, adapté à la mesure de températures au moyen d'une résistance à coefficient de température négatif (Rntc), caractérisé par un quatrième condensateur (C4) qui, avant le début de la première phase et entre la première et la deuxième phase, est relié à une partie (k, Io) de la source de courant continu (Io) par l'intermédiaire d'interrupteurs asservis (ES12, ES13), la tension engendrée aux bornes du quatrième condensateur (C4) augmentant la précision des mesures et rendant linéaire la résistance à coefficient de température négatif (Rntc).

FIG. 1

FIG. 2

FIG.3

FIG.4

FIG. 5

FIG. 6